# EUROPÄISCHE PATENTSCHRIFT

(11) **EP 0 864 473 B1**
(45) Veröffentlichungstag und Bekanntmachung des Hinweises auf die Patenterteilung: **12.02.2003**
(21) Anmeldenummer: 98103229.5
(22) Anmeldetag: 25.02.1998
(51) Int. Cl.: B60S 9/12, B61F 5/36

(54) **Abstützeinrichtung für Schienenfahrzeuge**
Support device for railway vehicles
Dispositif pour le support de véhicules ferroviaires

(30) Priorität: 13.03.1997 DE 19710341
(43) Veröffentlichungstag der Anmeldung: 16.09.1998
(73) Patentinhaber: Deutsche Bahn Aktiengesellschaft, 10365 Berlin (DE)
(72) Erfinder: Krauspe, Manfred, 14789 Wusterwitz (DE); Weggen, Michael, 14774 Brandenburg (DE)

(56) Entgegenhaltungen:
- US-A- 4 746 133
- PATENT ABSTRACTS OF JAPAN vol. 011, no. 086 (M-572), 17. März 1987 (1987-03-17) & JP 61 241210 A (HINO MOTORS LTD), 27. Oktober 1986 (1986-10-27)
- PATENT ABSTRACTS OF JAPAN vol. 1997, no. 01, 31. Januar 1997 (1997-01-31) & JP 08 230624 A (AICHI CORP), 10. September 1996 (1996-09-10)

## Beschreibung

Die Erfindung betrifft eine Abstützeinrichtung, die insbesondere für den Einsatz an Schienenfahrzeugen, welche mit Hebezeugen ausgerüstet sind, geeignet ist.

Bisher ausgeführte Lösungen einer Vergrößerung der Abstützbasis und dem Ausschalten des Einflusses der Fahrzeugfederung im Stand bei schienengebundenen Fahrzeugen arbeiten mit Hydraulikzylindern, Spindeln oder anderen geeigneten Abstützein-richtungen, die manuell gesteuert werden. In der Mehrzahl der Fälle werden die Anhebeeinrichtungen einzeln gesteuert, wobei auch eine Zusammenfassung der Einrichtung in Gruppen je Fahrzeugseite oder Gruppen je Fahrzeugende ausgeführt worden ist.

Die Überwachung der Wirksamkeit der Anhebeeinrichtung erfolgt bei Hydraulikzylindern zumeist mittels hydraulischer Druckschalter und Signalleuchten, bei Spindeln mittels mechanischen Schaltkontakten und Signalleuchten.

Weiterhin ist bekannt, daß die Sensoren sowie Schalter an Hydraulikzylindern oder Spindeln von Abstützeinrichtungen für die Umschaltung von Lastmomentbereichen an Hebezeugen genutzt werden. Dabei wird bei einem freistehenden Fahrzeug ein geringeres Lastmoment entsprechend dem Standmoment des Fahrzeugs eingestellt. Bei ausgefahrener Abstützung wird durch einen Druckschalter oder Drucksensor nach Erreichen des eingestellten Schaltdruckes im Absützzylinder ein größeres Lastmoment am Kran ein-gestellt, welches jetzt durch die Vergrößerung des Standmomentes vom Fahrzeug vertragen wird.

Technische Lösungen dieser Art sind bekannt und auch im Job Report-Palfinger PK 13500 beschrieben. Alle bekannten technischen Lösungen haben den Nachteil, daß beim Ausfahren der Abstützeinrichtungen die Position der Schienenfahrzeugräder beobachtet werden muß, da die Spurkränze der Räder zur Übertragung von Seitenkräften an der Schiene verbleiben müssen, aber trotzdem ein sicherer Stand auf dem vorhandenen Untergrund erreicht werden muß. Diese Kontrolle erfolgt üblicherweise visuell durch den Bediener der Abstützeinrichtung oder durch einen Helfer.

Bei mechanischen Abstützungen ergibt sich als weiterer Nachteil, daß während des Hebezeugbetriebes sich verändernde Abstützverhältnisse durch den Hebezeugbediener nicht erkannt werden. Ein Nachteil bekannter technischer Lösungen auf der Basis von hydraulischen Abstützungen ist, daß ein Nachgeben des Untergrundes durch Druckschalter zwar erkannt werden kann, aber die Nachsteuerung der Hydraulikzylinder wieder eine Kontrolle der Fahrzeugräder auf der Schiene erfordert. Weiterhin ist bei hydraulischen Abstützungen als Nachteil bekannt, daß allein Kranbewegungen unter Last die Druckverhältnisse in den Hydraulikzylindern so verändern können, daß die Schaltschwelle der Druckschalter oder Drucksensoren überschritten wird und das Hebezeug abgeschaltet oder auf ein geringeres Lastmoment umgeschaltet wird, obwohl eine sichere Abstützung gewährleistet ist.

Eine elektro-hydraulische Regelung der Abstützungen eines Fahrzeugs ist in DE 44 94 429 T1 aufgezeigt. Die dort angeführte niveauregulierende Vorrichtung für ein Straßenfahrzeug ließe sich auch auf den Fall eines Schienenfahrzeugs übertragen, beinhaltet aber das automatische Nivellieren des gesamten Fahrzeugs. Dieses Nivellieren ist bei einem Schienenfahrzeug nicht zu realisieren, da damit das Schienenfahrwerk komplett abhebt und die Gefahr einer Entgleisung besteht.

Ausgehend von diesem Stand der Technik liegt der Erfindung das Problem zugrunde, eine Abstützeinrichtung, insbesondere für Schienenfahrzeuge mit Hebezeugen, vorzuschlagen, bei der die Nachteile der im Stand der Technik beschriebenen technischen Lösungen vermieden werden.

Aufgabe ist es, eine Abstützeinrichtung so zu gestalten, daß abweichend von den bisher bekannten Lösungen eine Regeleinrichtung integriert wird, welche unabhängig vom Eingreifen des Bedieners eine ständige Wirksamkeit der eingeschalteten Abstützung sichert, einschließlich der Forderung, daß die Spurkränze der Fahrzeugräder an den Schienen Seitenkräfte übernehmen können.

Erfindungsgemäß wird diese Aufgabe durch die in den Schutzansprüchen aufgeführten Merkmale gelöst.

Die Erfindung wird anhand eines Ausführungsbeispiels näher beschrieben.

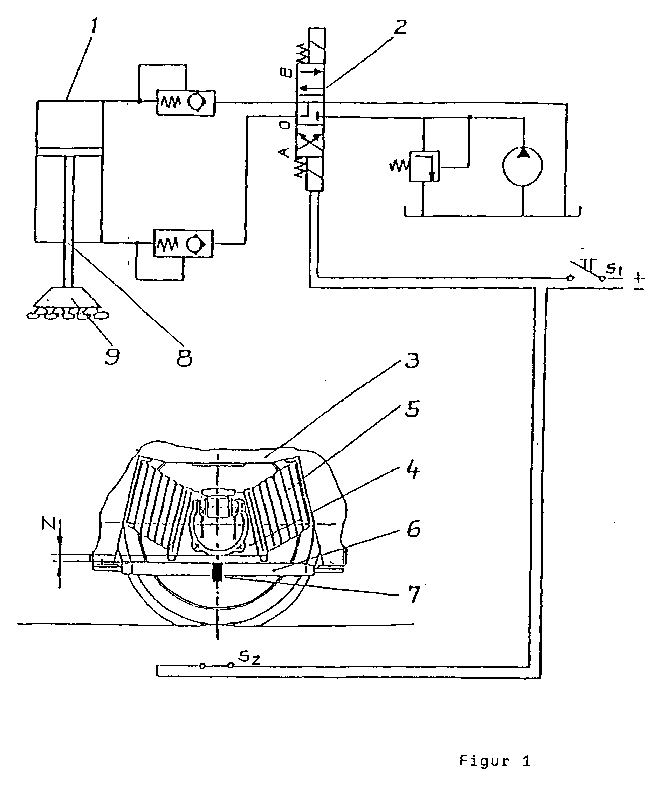

Zur Darstellung des Aufbaus und der prinzipiellen Funktionsweise der Anlage dient Figur 1. Gezeichnet ist ein Lösungsbeispiel für eine hydraulische Abstützung und für einen Aufstützpunkt. Durch Einschalten der Anlage mit dem Schalter S1 schaltet das elektrohydraulische Wegeventil 2 in die Stellung A und der Abstützzylinder 1 fährt aus. Trifft der an der Kolbenstange 8 befestigte Abstützteller 9 auf den festen Untergrund (Schotter, Schwelle) wird der Fahrzeugrahmen 3 angehoben, wobei der Radsatz und mit ihm das Achslagergehäuse 4 durch Entlastung der Federn 5 und die wirkende Eigenmasse auf der Schiene stehenbleiben. Dadurch verringert sich der Abstand Z zwischen Achslagergehäuse 4 und Achshaltersteg 6. Am Achshaltersteg 6 ist der Näherungsschalter 7 befestigt, der als Sensor dient. Geber kann bei dieser Radsatzbauart eine geeignete Kante am Lagergehäuse sein, bei anderen Ausführungsbeispielen wird dazu ein spezielles Konstruktionsteil dienen.

Bei Erreichen des am Näherungsschalter 7 eingestellten Wertes des Abstands Z schaltet dieser durch Schalter S 2 die Stromzufuhr zum Wegeventil 2 ab und die Bewegung des Abstützzylinders 1 ist beendet. Der Fahrzeugsteuerung und dem Bediener wird die Wirksamkeit der Abstützung gemeldet.

Läßt jetzt die Wirksamkeit der Abstützung durch Nachgeben des Schotters oder anderer Veränderungen während der Dauer des Abstützvorgangs nach, so vergrößert sich auch der Abstand Z wieder. Damit schaltet ohne weitere Bedienhandlung der im Näherungsschalter 7 befindliche Schalter S 2 das Magnetventil wieder in Stellung A und der Abstützzylinder 1 fährt weiter aus, bis der eingestellte Abstand Z wieder erreicht ist. Die Zeit der Unwirksamkeit der Abstützung wird der Fahrzeugsteuerung und dem Bediener angezeigt.

Findet der Abstützzylinder bis zum vollständigen Ausfahren keinen festen Untergrund mehr, bleibt die Unwirksamkeit der Abstützung dauerhaft signalisiert, und durch eine Warneinrichtung kann der Bediener zu Maßnahmen aufgefordert werden. Für diesen Fall kann über eine Folgeschaltung das Arbeitsgerät auf einen geringeren Lastmomentbereich zurückgeschaltet oder vollständig stillgesetzt werden.

Die Abstützung wird durch elektrisches Umschalten des Wegeventils 2 in die Stellung B wieder in die Ausgangsposition gebracht. Im allgemeinen ist die Anordnung von 2 Stück oder 4 Stück dieser Abstützeinrichtungen am Fahrzeug üblich. Die elektrische Signalverarbeitung zum Fahrzeug erfolgt dann als Summensignal.

## Patentansprüche

1. Hydraulische oder mechanische Abstützeinrichtung, insbesondere für Schienenfahrzeuge mit Hebezeugen oder anderen Arbeitsgeräten, welche ein größeres Standmoment des Fahrzeuges erfordern, **dadurch gekennzeichnet, dass**
- ein Abstand (Z) zwischen Fahrzeugrahmen (3) oder mit ihm starr verbundener Teile, wie Achshaltersteg (6), und einem Radsatz oder zu dem Radsatz gehörender Teile, wie Achslagergehäuse (4), durch einen Näherungsschalter (7) oder durch einen anderen geeigneten Geber gemessen wird und in einer elektrohydraulischen Steuerung als Eingangssignal wirkt,
- dass ein eingestellter Wert des Abstandes (Z) eine von der Fahrzeugbauart und der verwendeten Federung abhängige, dann aber eine konstante Größe ist,
- dass ein Regelsystem vorhanden ist, das durch Erfassen von Veränderungen des Abstandes (Z) sowohl hydraulisch als auch mechanisch wirkende Fahrzeugabstützungen selbsttätig so steuert, dass der Abstand (Z) den voreingestellten Wert des Abstandes (Z) erreicht.

2. Hydraulische oder mechanische Abstützeinrichtung nach Anspruch 1, **dadurch gekennzeichnet, dass** das zum Umschalten des Lastmomentbereiches des Hebezeuges oder Arbeitsgerätes notwendige Signal aus der Erfassung des Abstandes (Z) gewonnen und an die Kransteuerung weiterleitet wird.

## Claims

1. A hydraulic or mechanic support system, in particular, for rail vehicles with cranes or other tools that require a greater stability of the vehicle,
**characterized by** the fact that
- a distance (Z) between the vehicle frame (3) or parts rigidly connected thereto, e.g., a pedestal tie bar (6), and a wheelset or parts thereof, e.g., an axle box case (4), is measured with the aid of a proximity switch (7) or another suitable sensor and used as the input signal in an electrohydraulic control, by the fact
- that an adjusted value of the distance (Z) is a variable that depends on the type of vehicle and the spring system used, but remains constant once adjusted, and by the fact
- that a control system is provided which automatically controls hydraulically and mechanically acting vehicle support systems based on detected changes in the distance (Z), namely in such a way that the distance (Z) once again reaches the preadjusted value of the distance (Z).

2. The hydraulic or mechanic support system according to Claim 1,
**characterized by** the fact that
the signal required for changing the load moment area of the crane or other tool is obtained from the detected distance (Z) and forwarded to the crane control.

## Revendications

1. Dispositif hydraulique ou mécanique de soutien, notamment pour les véhicules ferroviaires à appareils de levage ou autres appareils de travail nécessitant un assez long moment de positionnement du véhicule,
**caractérisé en ce que**
- une distance (Z) entre le châssis du véhicule (3) ou avec des pièces reliées rigidement à celui-ci, comme une entretoise de plaque de garde (6) et une paire de roues ou des pièces faisant partie de la paire de roues, comme un corps de boîte d'essieux (4) est mesurée par un détecteur de proximité (7) ou par un autre transmetteur adapté et agit comme signal d'entrée dans une commande électrohydraulique,
- une valeur réglée de la distance (Z) est une grandeur dépendant du type de construction du véhicule et du système de ressorts utilisés, mais ensuite une grandeur constante,
- il y a un système de contrôle qui commande de manière autonome les béquilles du véhicule aussi bien au niveau hydraulique que mécanique en détectant les modifications de la distance (z), de manière à ce que la distance (Z) atteigne la valeur prédéfinie pour cette distance (Z).

2. Dispositif hydraulique ou mécanique de soutien selon la revendication 1,
**caractérisé en ce que**
le signal nécessaire pour la commutation de la zone de moment de charge de l'appareil de levage ou de l'appareil de travail est obtenu par détection et transmission de la distance (Z) à la commande de la grue.
